# EUROPÄISCHE PATENTSCHRIFT

(11) **EP 2 898 380 B1**
(45) Veröffentlichungstag und Bekanntmachung des Hinweises auf die Patenterteilung: **01.09.2021**
(21) Anmeldenummer: 13765681.5
(22) Anmeldetag: 13.09.2013
(51) Int. Cl.: G05B 19/409

(54) **BEDIENSYSTEM FÜR EINE BEHÄLTERBEHANDLUNGSMASCHINE, EIN BEDIENGERÄT UND EINEN SEPARATEN ZUSATZBILDSCHIRM**
OPERATING SYSTEM FOR A CONTAINER HANDLING MACHINE, AN OPERATING DEVICE, AND A SEPARATE ADDITIONAL SCREEN
SYSTÈME DE COMMANDE CONÇU POUR UNE MACHINE DE TRAITEMENT DE CONTENANT, APPAREIL DE COMMANDE ET ÉCRAN SUPPLÉMENTAIRE DISTINCT

(30) Priorität: 19.09.2012 DE 102012216770
(43) Veröffentlichungstag der Anmeldung: 29.07.2015
(73) Patentinhaber: Krones AG, 93073 Neutraubling (DE)
(72) Erfinder: KELLHAMMER, Thomas, 93073 Neutraubling (DE); PAULUS, Josef, 93073 Neutraubling (DE)
(74) Vertreter: Grünecker Patent- und Rechtsanwälte PartG mbB
(86) Internationale Anmeldenummer: PCT/EP2013/069018
(87) Internationale Veröffentlichungsnummer: WO 2014/044608

(56) Entgegenhaltungen:
- EP-A1- 2 019 347
- EP-A1- 2 224 295
- EP-A1- 2 306 254
- WO-A1-2011/120624
- DE-T5-112005 001 152
- US-A1- 2010 235 240
- US-A1- 2010 290 084

## Beschreibung

Üblicherweise bedient ein Benutzer von Getränkeverarbeitungsanlagen die einzelnen Behälterbehandlungsmaschinen über ein Bediensystem. Dabei werden hauptsächlich stationäre HMI-Bediengeräte mit einem Bildschirm eingesetzt (Human Machine Interface), die fest an der jeweiligen Maschine verbaut sind. Beispielsweise können mit dem Bediensystem einzelne Abläufe in der Maschine ausgelöst, Parameter eingestellt und/oder Alarm- bzw. Warnsignale empfangen werden. Ferner können derartige Bediensysteme über Dokumente mit Bedienungs- und/oder Wartungsanleitungen der jeweiligen Maschine verfügen, in denen der Benutzer beispielsweise Montageabläufe nachschlagen kann.

Bei einem Wartungsvorgang werden dem Benutzer auch verschiedene Informationen angezeigt, beispielsweise sortenabhängige Einstellwerte oder Anzugsdrehmomente für einzelne Schrauben. Der Benutzer liest dann üblicherweise die Informationen vom Bildschirm ab und notiert sich diese auf einem Handzettel, da der Bildschirm selbst nicht von jedem Bereich der Maschine ablesbar bzw. einsehbar ist. Vor Ort kann dann der Benutzer mit den Informationen auf dem Handzettel die Arbeitsvorgänge fachgerecht durchführen.

Derartige Bediensysteme haben zum Nachteil, dass das manuelle Notieren der Informationen langwierig und fehlerträchtig ist. Der Benutzer muss von sich aus die Informationen so selektieren, dass er dann bei der Arbeit an der Behälterbehandlungsmaschine alle nötigen Informationen hat. Dabei kann er vergessen, einzelne Informationen abzuschreiben und muss in Folge dessen erneut zum Bediengerät laufen. Dies ist entsprechend umständlich und zeitaufwändig. Darüber hinaus muss sich der Benutzer bei dieser Vorgehensweise die Informationen aus einzelnen Anzeigemasken, Dokumentationen und Bedienungsanleitungen zusammensuchen.

Die EP 2 306 254 A1 offenbart eine Vorrichtung zur Behandeln von Behältnissen mit einer tragbaren Informationseinheit an der vom Benutzer Werte über eine Informationseingabeeinrichtung eingegeben und über eine Anzeigeeinrichtung dargestellt werden können. Die vom Benutzer eingegebenen Werte können über eine Sendeeinrichtung an die Eingabeeinheit der Vorrichtung übertragen werden.

Die DE 11 2005 001 152 T5 offenbart ein Verfahren und System zum Abrufen und Anzeigen technischer Daten für eine Industrieeinrichtung, mit dem die Industrieeinrichtung an einer tragbaren Recheneinheit ausgewählt und als Referenz über ein Datennetzwerk zu einer getrennten Anzeigeeinheit übertragen wird. Anschließend wird abhängig von der Referenz ein GUI an der getrennten Anzeigeeinheit angezeigt und darüber technische Daten der Industrieeinrichtung abgerufen.

Die US 2010/0290084 A1 offenbart ein handgehaltenes Wartungstool zur Prozesskontrolle und für Messaufgaben, dessen Eingaben und Bildschirmausgaben auf einem separaten Computer gespiegelt werden können.

Das Dokument US 2010/235240 A1 betrifft einen Getränkeautomaten für den Verkauf von Getränkeprodukten, wobei die Steuerungseinheit des Getränkeautomaten ein Touchscreen umfasst, mit dem ein Kunde Inhalte auswählen und über Bluetooth auf sein Handy herunterladen kann.

Der vorliegenden Erfindung liegt die Aufgabe zu Grunde, ein Bediensystem für eine Behälterbehandlungsmaschine bereitzustellen, das weniger fehleranfällig und einfacher in der Handhabung ist.

Zur Lösung der Aufgabenstellung stellt die Erfindung ein Bediensystem für eine Behälterbehandlungsmaschine mit den Merkmalen des Anspruchs 1 bereit. Vorteilhafte Ausführungsformen der Erfindung sind in den Unteransprüchen genannt.

Dadurch, dass das Bediengerät zur Auswahl der Informationen ausgebildet ist, können diejenigen Informationen, die während der Wartung vom Benutzer benötigt werden, entsprechend ausgewählt werden. Anschließend können die ausgewählten Informationen mit dem Datensender des Bediengeräts an den Datensender des separaten Zusatzbildschirms übermittelt und auf diesem dargestellt werden. Entsprechend werden die Informationen dann über den separaten Zusatzbildschirm vor Ort an der Maschine dem Benutzer angezeigt und dieser benötigt so keinen Handzettel mehr, um die Informationen aufzuschreiben. Darüber hinaus ist es so möglich, verschiedene Seiten von Informationen auf dem Zusatzbildschirm abzurufen, ohne dabei eine Vielzahl von Handzetteln zu beschreiben und mitzuführen.

Die Behälterbehandlungsmaschine ist in einer Getränkeverarbeitungsanlage angeordnet Die Behälterbehandlungsmaschine kann beispielsweise eine Streck-Blas-Maschine, ein Rinser, ein Füller, ein Verschließer, ein Etikettierer und/oder eine Verpackungsmaschine oder eine andere Behälterbehandlungsmaschine sein. Die Behälterbehandlungsmaschine kann eine computerbasierte Maschinensteuerung umfassen. Das Bediengerät kann ein HMI-Bediengerät (Human Machine Interface) sein. Das Bediengerät kann eine Eingabeeinheit, insbesondere eine Tastatur, Bedienknöpfe und/oder ein Zeigegerät (Maus, Trackball) haben, um die Informationen auszuwählen. Das Bediengerät kann als stationäres oder mobiles Bediengerät ausgeführt sein. "Stationär" kann dabei bedeuten, dass das Bediengerät unmittelbar an der Behälterbehandlungsmaschine angeordnet ist.

Die Informationen können einen mechanischen Einstellwert (Höhen, Abstände), ein Drehmoment, eine Reihenfolge beim Aus- und Einbau eines Rüstteils, eine Markierung eines Bauteils, eine Codierung eines Bauteils, einen Wartungshinweis, ein Wechselintervall, einen Kurztext, eine Laufzeit eines Bauteils, ein allgemeiner Hinweis, eine Dokumentation und/oder eine Bedienungsanleitung umfassen. Die mechanischen Einstellwerte können insbesondere sortenabhängig sein. Sortenabhängig kann dabei bedeuten, dass diese von einer Getränkesorte abhängig sind.

Die Auswahl der Informationen kann bedeuten, dass die Informationen durch einen Benutzer am Bildschirm des Bediengeräts und/oder über die Eingabeeinheit auswählbar sind. Die Auswahl der Informationen kann auch bedeuten, dass das Bediengerät dazu ausgebildet ist, die Informationen automatisch auszuwählen, insbesondere durch eine Software. Die Informationen können durch ein Fernwartungssystem auswählbar sein.

Der Datensender und der Datenempfänger können zur Übermittlung der Informationen mit einem Kabel, Systembus, per Infrarot oder Funk miteinander verbunden sein.

Der Zusatzbildschirm kann zur Darstellung der ausgewählten Informationen ein LCD-Display oder ein TFT-Display umfassen. Insbesondere kann der Zusatzbildschirm zur Darstellung von grafischen Informationen ausgebildet sein.

Der Zusatzbildschirm zur Darstellung der ausgewählten Informationen kann eine Anzeigeeinheit mit elektronischem Papier umfassen. Dadurch kann der Zusatzbildschirm besonders energiesparend und kostengünstig ausgeführt sein. Das elektronische Papier kann bistabile Anzeigeelemente (Pixel) umfassen und insbesondere als reflektives Display ausgeführt sein, bei dem das Umgebungslicht zur Beleuchtung dient. Dadurch benötigt der Zusatzbildschirm keine Beleuchtungseinheit zur Hinterleuchtung des Bildschirms. Das elektronische Papier kann ein sogenanntes E-Paper, E-Ink oder E-Papierdisplay sein. Das elektronische Papier kann mit Elektrophorese, mit einem bistabilen LCD (z.B. Cholesteric Liquid Chrystal-Display), mit Elektrobenetzung oder mit mikromechanisch gesteuerter Interferenzmodulation ausgebildet sein. Das elektronische Papier kann derart ausgebildet sein, dass es ausschließlich zu einem Wechsel der Darstellung Energie benötigt.

Der Bildschirm des Bediengeräts kann zur Benutzereingabe, insbesondere zu der Auswahl der Informationen, berührungsempfindlich ausgebildet sein. Dadurch kann ein Benutzer die Informationen besonders einfach direkt durch die Berührung des Bildschirms auswählen. Der berührungsempfindliche Bildschirm kann dazu ausgebildet sein, virtuelle Knöpfe anzuzeigen, um einzelne Informationen auf dem Bildschirm auszuwählen.

Der Datensender und der Datenempfänger können zur drahtlosen Übertragung der Informationen mit jeweils einer Funkschnittstelle ausgebildet sein. Dadurch können der Datensender und der Datenempfänger nach einer standardisierten Methode miteinander über Funk verbunden sein. Die Funkschnittstelle kann insbesondere eine WLAN- oder Bluetooth-Schnittstelle sein. Der Datensender und der Datenempfänger können in ein Funknetzwerk eingebunden sein.

Der Zusatzbildschirm kann eine Batterie zur Energieversorgung umfassen. Dadurch kann die Energiezuführung unabhängig von anderen Systemen ohne Kabel erfolgen.

Das Bediengerät kann Informationsvorlagen zur automatischen Auswahl der Informationen umfassen, insbesondere wobei die Informationen aus unterschiedlichen Informationstypen gebildet werden und in den Informationsvorlagen jeweils eine hierarchische Anordnung der Informationstypen gespeichert ist. Dadurch kann eine Vorauswahl von bestimmten Informationen im Bediengerät als Informationsvorlage abgelegt werden und zu einem späteren Zeitpunkt durch den Benutzer abgerufen werden, so dass eine automatische Auswahl der dort hinterlegten Informationen erfolgt. Dabei können die Informationstypen Verweise auf Informationen sein, die automatisch aktualisiert werden und mit denen insbesondere die Information aus einer Maschinensteuerung der Behälterbehandlungsmaschine ausgelesen werden können. Die Informationstypen können Kennzeichnungen für bestimmte Informationen sein. Beispielsweise kann ein Informationstyp ein bestimmter, sortenabhängiger Einstellwert für eine Baugruppe in der Behälterbehandlungsmaschine sein (z.B. deren Höhe). In der hierarchischen Anordnung können einzelne Informationstypen, insbesondere in Bezug auf eine bestimmte Baugruppe, in mindestens einer Gruppe angeordnet sein. Die Informationsvorlagen können im Speicher des Bediengeräts gespeichert sein, insbesondere in Form einer Liste. Die Informationsvorlagen können alternativ in einem Speicher des Zusatzbildschirms gespeichert sein.

Der Zusatzbildschirm kann als mobile Einheit ausgebildet sein. Dadurch kann der Zusatzbildschirm vom Benutzer unabhängig vom Bediengerät mitgenommen werden und in dem Bereich abgelegt werden, in dem der Benutzer eine Wartung oder Reparatur an der Maschine vornimmt. Der Zusatzbildschirm kann eine Dicke in einem Bereich von 2 mm bis 15 mm aufweisen, insbesondere in einem Bereich von 5 mm bis 10 mm. Dadurch ist der Zusatzbildschirm besonders flach ausgebildet und kann entsprechend leicht vom Benutzer an die Maschine mitgenommen werden.

Das Bediengerät und der Zusatzbildschirm können jeweils eine Induktionsspule umfassen, um den Zusatzbildschirm beim Empfang der Informationen und bei einer Aktualisierung der Darstellung mit Energie zu versorgen, insbesondere wobei die Induktionsspulen als Antennen zur drahtlosen Übertragung der Informationen ausgebildet sind und die Induktionsspule des Bediengeräts dem Datensender und die Induktionsspule des Zusatzbildschirms dem Datenempfänger zugeordnet sind. Dadurch kann der Zusatzbildschirm vom Bediengerät temporär mit Energie versorgt werden, um die Informationen auf diesen zu übertragen und die Anzeige zu aktualisieren. Anschließend benötigt der Zusatzbildschirm keine eigene Energiequelle zur Anzeige. Die Induktionsspule kann direkt am Bediengerät oder in einem Abstand dazu an der Behälterbehandlungsmaschine angeordnet sein. Dadurch, dass die Induktionsspulen als Antennen zur Datenübertragung ausgebildet sein können, ist es auf einfache Weise möglich, die Energieversorgung des Zusatzbildschirms mit der Datenübertragung per Funk zu integrieren.

Der mindestens eine Zusatzbildschirm kann an einer Baugruppe der Behälterbehandlungsmaschine angeordnet sein. Dies kann bedeuten, dass die Behälterbehandlungsmaschine verschiedene Baugruppen aufweist, an denen jeweils ein Zusatzbildschirm angeordnet ist. Auf diesem Zusatzbildschirmen können Informationen zur jeweiligen Baugruppe angezeigt werden. Dadurch muss ein Benutzer den Zusatzbildschirm nicht mitnehmen, sondern kann direkt vor Ort an der Baugruppe die notwendigen Informationen ablesen.

Die Erfindung stellt außerdem eine Behälterbehandlungsmaschine nach Anspruch 10 bereit, umfassend ein oben beschriebenes Bediensystem.

Mit dem Anspruch 11 stellt die Erfindung weiterhin ein Verfahren zur Bedienung und/oder Beobachtung einer Behälterbehandlungsmaschine bereit, wobei Informationen an einem Bediengerät für die Behälterbehandlungsmaschine, das einen Bildschirm umfasst, ausgewählt werden, die Informationen mit einem Datensender im Bediengerät an einen Datenempfänger in mindestens einem separaten Zusatzbildschirm übermittel werden, und die Informationen auf dem Zusatzbildschirm angezeigt werden.

Dadurch, dass die Informationen an dem Bediengerät ausgewählt werden und mit dem Datensender im Bediengerät an den Datenempfänger in mindestens einem separaten Zusatzbildschirm übermittelt und dort angezeigt werden, kann der Benutzer die benötigten Informationen auswählen und dann vor Ort bei der Arbeit an der Maschine ablesen. Da die gewünschten Informationen bereits im Bediengerät gespeichert sind, müssen diese also nur noch ausgewählt und an den Zusatzbildschirm übertragen werden. Dementsprechend benötigt der Benutzer keine Handzettel, um die Informationen aufzuschreiben und die Arbeit wird dementsprechend erleichtert. Darüber hinaus können mit dem Verfahren die Informationen fehlerlos auf den Zusatzbildschirm übertragen werden.

Bei dem Verfahren können bei der Auswahl der Informationen am Bildschirm des Bediengeräts von einem Benutzer einzelne Informationstypen ausgewählt werden, die insbesondere Texte, Werte und/oder Parameter sind. Dadurch kann der Benutzer selbst entscheiden, welche Informationen für die jeweiligen Abläufe notwendig sind. Der Benutzer kann die Informationen und/oder Informationstypen über ein Eingabesystem auswählen, insbesondere über eine Tastatur, ein Zeigegerät und/oder einen berührungsempfindlicher Bildschirm. Bei einem berührungsempfindlichen Bildschirm können auf dem Bildschirm Knöpfe angezeigt werden, über die der Benutzer entscheiden kann, ob die entsprechende Information zu übertragen ist.

Bei dem Verfahren können im Bediengerät Informationsvorlagen mit jeweils einer hierarchischen Anordnung von Informationstypen abgespeichert werden und ein Benutzer mindestens eine Informationsvorlage auswählen, um die Informationen anhand der darin gespeicherten Informationstypen automatisch auszuwählen. Dadurch muss der Benutzer nicht jedes Mal die einzelnen Informationen auswählen, sondern kann bereits vorgefertigte Informationsvorlagenauswählen und dann die Informationen automatisch an den Zusatzbildschirm übertragen, wie beispielsweise für immer wiederkehrende Arbeitsabläufe. Dadurch kann bei der Auswahl der Informationen Zeit gespart werden.

Bei dem Verfahren kann bei der Auswahl der Informationen ein Screenshot des Bildschirms am Bediengerät erstellt werden. Dadurch ist es besonders einfach möglich, die gerade am Bediengerät angezeigten Informationen an den Zusatzbildschirm zu übermitteln.

Bei dem Verfahren kann der Benutzer bei der Auswahl der Informationen Dokumente aus einer Liste auswählen, insbesondere wobei die Dokumente Bedienungsanleitungen, Montageanleitungen und/oder Checklisten sind. Dadurch braucht der Benutzer die genannten Dokumente nicht ausgedruckt zur Behälterbehandlungsmaschine mitnehmen, sondern kann diese an dem Zusatzbildschirm einsehen. Dadurch wird der Benutzer besonders gut bei den Arbeitsvorgängen unterstützt.

Zum Blättern in Dokumenten oder Informationsmasken kann der Benutzer Tasten am Zusatzbildschirm verwenden.

Bei dem Verfahren können die ausgewählten Informationen individuelle Baugruppeninformationen sein, die an einer Baugruppe der Behälterbehandlungsmaschine mit dem Zusatzbildschirm angezeigt werden. Dabei kann an mehreren Baugruppen jeweils ein Zusatzbildschirm angebracht sein, bei dem insbesondere die für die Baugruppe relevanten Informationen angezeigt werden. Eine Baugruppe kann ein Motor, eine Steuereinheit, ein Linearantrieb und/oder ein Führungssegment sein.

Weitere Merkmale und Vorteile der Erfindung werden nachfolgend anhand der in den Figuren dargestellten Ausführungsbeispiele erläutert. Dabei zeigt:
- Fig. 1: eine perspektivische Darstellung einer Behälterbehandlungsmaschine mit einer ersten Ausführungsform eines erfindungsgemäßen Bediensystems;
- Fig. 2: eine Frontalansicht des in Fig. 1 gezeigten, erfindungsgemäßen Bediensystems;
- Fig. 3: eine perspektivische Darstellung einer zweiten Ausführungsform des erfindungsgemäßen Bediensystems; und
- Fig. 4: eine Frontalansicht des in Fig. 3 gezeigten Bediensystems.

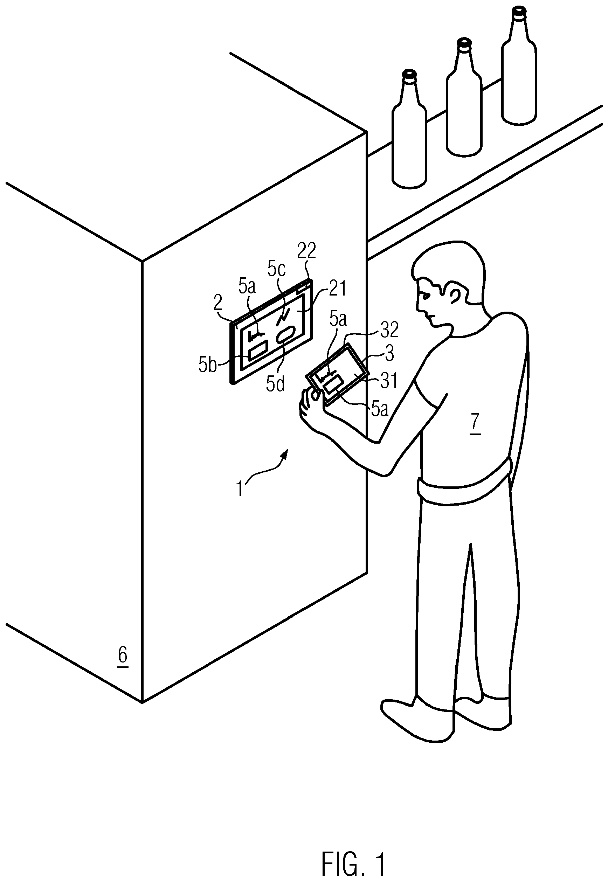

In Fig. 1 ist eine perspektivische Darstellung einer ersten Ausführungsform eines erfindungsgemäßen Bediensystems 1 gezeigt. Dabei ist an einer Behälterbehandlungsmaschine 6 ein Bediengerät 2 stationär angeordnet. Das Bediengerät 2 verfügt über einen Datensender 22, mit dem ausgewählte Informationen 5a, 5b auf einen Zusatzbildschirm 3 übertragen werden können, der dazu einen Datenempfänger 32 enthält. Der Zusatzbildschirm 3 ist dabei mobil ausgeführt, so dass ihn der Benutzer 7 in den Händen zu einer Montagestelle an der Behälterbehandlungsmaschine 6 mitnehmen kann.

Das Bediengerät 2 ist stationär an der Seitenwand der Behälterbehandlungsmaschine 6 integriert und mit der Maschinensteuerung verbunden. Zur Anzeige und Eingabe dient dabei der berührungsempfindliche Bildschirm 21, auf dem Informationen 5a, 5b, 5c, 5d angezeigt werden können und über das die Software des Bediengeräts 21 bedient werden kann. Beispielsweise können hier Betriebswerte der Behälterbehandlungsmaschine 6 eingesehen werden oder beispielsweise die Fördergeschwindigkeit eines Laufbands eingestellt werden. Darüber hinaus ist an dem Bediengerät ein Datensender 22 angeordnet, der als Funkschnittstelle ausgeführt ist (beispielsweise WLAN oder Bluetooth). Mit der Funkschnittstelle kann das Bediengerät 2 einerseits Funksignale anderer Anlageneinheiten empfangen als auch die Informationen 5a, 5b, 5c, 5d an den Zusatzbildschirm 3 übermitteln.

An dem Zusatzbildschirm 3 ist der Datenempfänger 32 angeordnet, der ebenfalls als Funkschnittstelle ausgeführt ist. Hiermit kann er von dem Bediengerät 2 die Informationen 5a, 5b, 5c, 5d empfangen. Zu sehen ist ebenfalls, dass auf der Anzeigeeinheit 31 des Zusatzbildschirms 3 die ausgewählten Informationen 5a und 5b angezeigt werden. Der Benutzer 7 kann somit den Zusatzbildschirm zu einem beliebigen Ort mitnehmen.

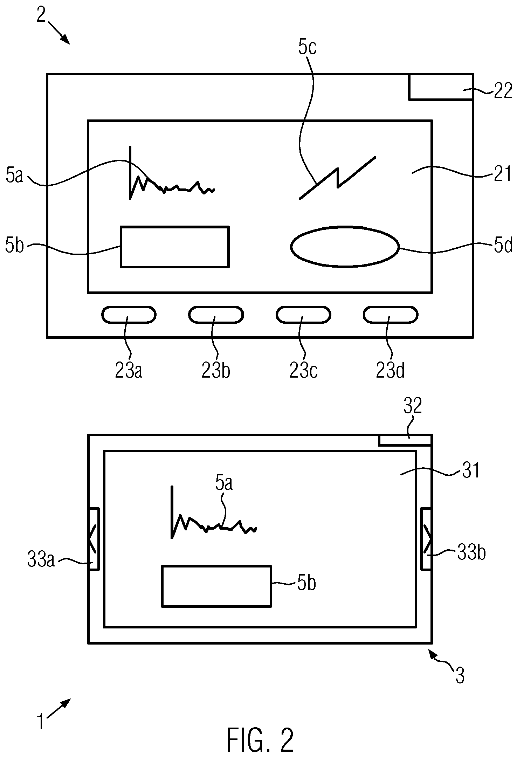

Fig. 2 zeigt in einer Frontalansicht das Bediensystem 1 aus der Fig. 1. Im oberen Bereich ist das Bediengerät 2 zu sehen, auf dem die Informationen 5a, 5b, 5c und 5d auf dem Bildschirm 21 genauer dargestellt sind. Der Benutzer kann durch Antippen der einzelnen Informationen 5a, 5b, 5c, 5d diese auswählen, um sie auf den Zusatzbildschirm 3 zu übertragen. Beispielsweise sind hier die Informationen 5a und 5b ausgewählt. Beispielsweise kann die Information 5a eine Motorlaufkennlinie sein und die Information 5b ein bestimmter Einstellwert für einen Motor. Darüber hinaus sind am unteren Rand des Bediengeräts 2 mehrere Funktionstasten 23a, 23b, 23c und 23d angeordnet, über die auf Softwarefunktionen des Bediengeräts 2 einfach zugegriffen werden kann. Durch Drücken der Taste 23a kann ein Screenshot des aktuellen Bildschirminhalts des Bediengeräts 2 erzeugt werden. Über den Datensender 22 können nun die ausgewählten Informationen 5a und 5b, sowie der Screenshot an den Zusatzbildschirm 3 übertragen werden.

Im unteren Bereich der Fig. 2 ist der Zusatzbildschirm 3 zu sehen, auf dem die Informationen 5a und 5b dargestellt werden. Der Zusatzbildschirm 3 enthält dabei als Anzeigeeinheit 31 ein elektronisches Papier, auf dem die Anzeige besonders energiesparend erfolgt. Darüber hinaus enthält der Zusatzbildschirm 3 eine Batterie zur Energieversorgung des Zusatzbildschirms 3 (hier nicht dargestellt).

Darüber hinaus sind die Tasten 33a und 33b am Zusatzbildschirm 3 gezeigt, mit denen es möglich ist, die Bildschirminhalte umzuschalten. Dabei können verschiedene Informationsebenen angezeigt werden, Dokumente angezeigt werden und/oder in den Dokumenten geblättert werden. Dadurch kann der Benutzer 7 auf einfache Weise in Bedienungsanleitungen blättern und zusätzlich Informationen direkt zur Montagestelle mitnehmen.

In einer alternativen Ausführungsform enthält das Bediengerät 2 eine Induktionsspule in dem Datensender 22 und der Zusatzbildschirm 3 eine Induktionsspule in dem Datenempfänger 32. Beim Empfang mit dem Datenempfänger 32 und einer Aktualisierung der Informationen 5a, 5b auf der Anzeigeeinheit 31 wird temporär durch Induktion Energie vom Bediengerät auf den Zusatzbildschirm 3 übertragen. Sobald die Informationen 5a, 5b übertragen sind, werden diese ohne weitere Energiezufuhr mittels des elektronischen Papiers permanent angezeigt. Somit muss der Zusatzbildschirm 3 nicht über eine eigene Energieversorgung verfügen.

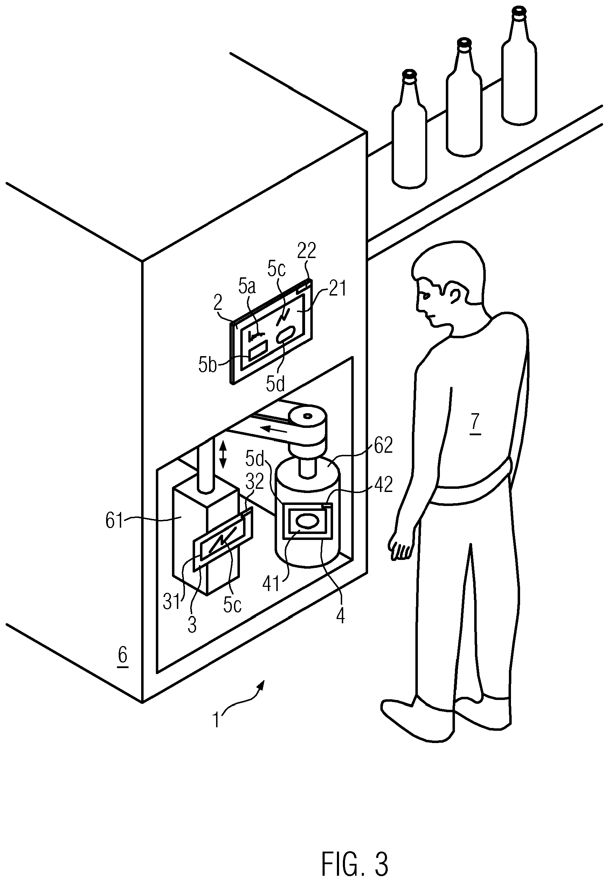

In Fig. 3 ist eine perspektivische Darstellung einer zweiten Ausführungsform des erfindungsgemäßen Bediensystems 1 gezeigt. Zu sehen ist dabei eine Behälterbehandlungsmaschine 6, an der das Bediengerät 2 stationär angeordnet ist. Darüber hinaus ist am unteren Bereich der Behälterbehandlungsmaschine 6 eine Öffnung gezeigt, durch die hindurch zwei Baugruppen sichtbar sind. Bei der ersten Baugruppe handelt es sich um einen Linearmotor 61, auf dem ein Zusatzbildschirm 3 angeordnet ist. Darüber hinaus ist als zweite Baugruppe ein Motor 62 gezeigt, an dem der Zusatzbildschirm 4 angeordnet ist und der über einen Riemen ein Förderband antreibt.

Der Benutzer 7 kann dabei auf dem Bildschirm 21 des Bediengeräts 2 verschiedene Informationen 5a, 5b, 5c und 5d auswählen und diese mit dem Datensender 22 an die Zusatzbildschirme 3 und 4 übertragen. Dabei enthalten die Zusatzbildschirme 3, 4 jeweils einen Datenempfänger 32, 42, der jeweils mit einer Funkschnittstelle ausgestattet ist. Auf der Anzeige 31 des Zusatzbildschirms 3 wird dabei die Information 5c angezeigt. Auf der Anzeigeeinheit 41 des Zusatzbildschirms 4 wird die Information 5d angezeigt.

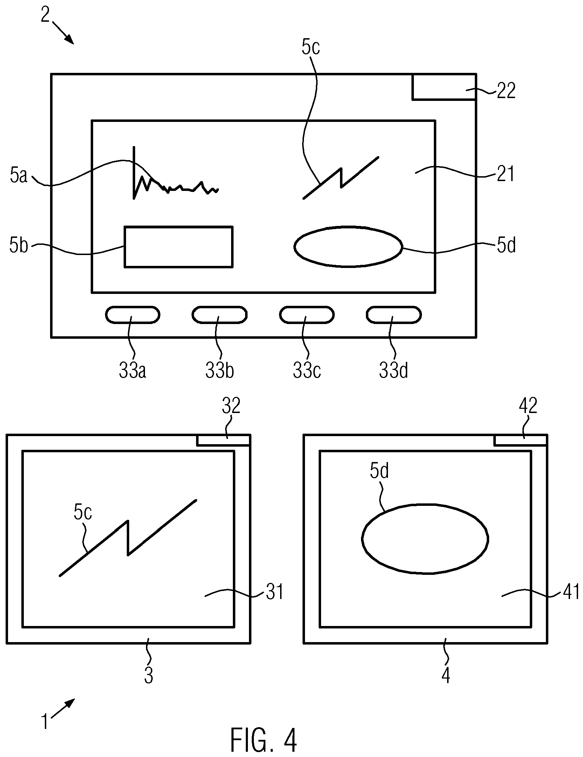

In Fig. 4 wird in einer Frontalansicht das Bediensystem 1 aus der Fig. 3 genauer gezeigt. Auf dem Bildschirm 21 des Bediengeräts 2 werden die Informationen 5a, 5b, 5c und 5d angezeigt. Hierbei ist beispielsweise die Information 5c eine Sollkurve des Linearmotors 61 und die Information 5d eine Soll-Geschwindigkeit des Motors 62. Der Benutzer 7 kann dabei über die Tasten 33a, 33b, 33c und 33d verschiedene Informationsvorlagen auswählen, mit denen automatisch die gewünschten Informationen ausgewählt werden können. Dabei enthalten die Informationsvorlagen eine hierarchische Anordnung von Informationstypen, die jeweils auf bestimmte Werte, Betriebsparameter, etc. zugreifen. Beim Betätigen der entsprechenden Taste 33a, 33b, 33c oder 33d wird eine bestimmte Informationsvorlage ausgewählt und die entsprechenden Informationen über die darin gespeicherten Informationstypen automatisch aktualisiert. Die so ausgewählten Informationen 5c, 5d werden dann über den Datensender 22 an die Zusatzbildschirme 3 und 4 übertragen.

Der Zusatzbildschirm 3 weist den Datenempfänger 32 auf, mit dem die vom Bediengerät 2 gesendete Information 5c empfangen werden kann. Nach dem Empfang der Information 5c wird diese auf der Anzeigeeinheit 31 dargestellt. Die Anzeigeeinheit 31 ist hierbei entweder als elektronisches Papier oder als LCD-Display ausgeführt. Als Energieversorgung dient eine Batterie (hier nicht dargestellt). Alternativ kann der Zusatzbildschirm mehrere Informationen 5a, 5b 5c, 5d empfangen und darstellen.

Ebenso enthält der Zusatzbildschirm 4 einen Datenempfänger 42, mit dem die Information 5d vom Bediengerät 2 empfangen werden kann. Diese wird dann anschließend auf der Anzeigeeinheit 41 angezeigt, die ebenfalls als elektronisches Papier oder als LCD-Display ausgeführt ist. Auch der Zusatzbildschirm 4 kann mehrere Informationen 5a, 5b 5c, 5d empfangen und darstellen.

Hierdurch kann der Benutzer 7 die Informationen 5c, 5d vor Ort an der jeweiligen Baugruppe einsehen und braucht weder den Zusatzbildschirm mit einer Hand zu halten noch einen Handzettel mitführen. Darüber hinaus ist bei dem erfindungsgemäßen Bediensystem und Verfahren ausgeschlossen, dass die Informationen 5a, 5b, 5c, 5d fehlerhaft an den Zusatzbildschirm 3, 4 übertragen werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Bediensystem (1) für eine Behälterbehandlungsmaschine (6) einer Getränkeverarbeitungsanlage, umfassend
ein stationäres Bediengerät (2) für die Behälterbehandlungsmaschine (6) mit einem Bildschirm (21), einer Eingabeeinheit und einem Datensender (22) zur Übermittlung von Informationen (5a, 5b, 5c, 5d) und
mindestens einem separaten Zusatzbildschirm (3, 4) mit einem Datenempfänger (32, 42) zum Empfang der Informationen (5a, 5b, 5c, 5d),
**dadurch gekennzeichnet, dass**
das Bediengerät (2) zur Auswahl der Informationen (5a, 5b, 5c, 5d) ausgebildet ist, wobei die Informationen durch einen Benutzer (7) am Bildschirm (21) des Bediengeräts (2) und/oder über die Eingabeeinheit auswählbar sind, und
der Zusatzbildschirm (3) zur Darstellung der am Bediengerät (2) ausgewählten und mit dem Datenempfänger (32, 42) empfangenen Informationen (5a, 5b, 5c, 5d) ausgebildet ist.

2. Bediensystem (1) nach Anspruch 1, wobei der Zusatzbildschirm (3) zur Darstellung der ausgewählten Informationen (5a, 5b, 5c, 5d) eine Anzeigeeinheit (31, 41) mit elektronischem Papier umfasst.

3. Bediensystem (1) nach Anspruch 1 oder 2, wobei der Bildschirm (21) des Bediengeräts (2) zur Benutzereingabe, insbesondere zu der Auswahl der Informationen (5a, 5b, 5c, 5d), berührungsempfindlich ausgebildet ist.

4. Bediensystem (1) nach wenigstens einem der vorangegangenen Ansprüche, wobei der Datensender (22) und der Datenempfänger (32, 42) zur drahtlosen Übertragung der Informationen (5a, 5b, 5c, 5d) mit jeweils einer Funkschnittstelle ausgebildet sind.

5. Bediensystem (1) nach wenigstens einem der vorangegangenen Ansprüche, wobei der Zusatzbildschirm (3, 4) eine Batterie zur Energieversorgung umfasst.

6. Bediensystem (1) nach wenigstens einem der vorangegangenen Ansprüche, wobei das Bediengerät (2) Informationsvorlagen zur automatischen Auswahl der Informationen (5a, 5b, 5c, 5d) umfasst, insbesondere wobei die Informationen (5a, 5b, 5c, 5d) aus unterschiedlichen Informationstypen gebildet werden und in den Informationsvorlagen jeweils eine hierarchische Anordnung der Informationstypen gespeichert ist.

7. Bediensystem (1) nach wenigstens einem der vorangegangenen Ansprüche, wobei der Zusatzbildschirm (3, 4) als mobile Einheit ausgebildet ist.

8. Bediensystem (1) nach Anspruch 7, wobei das Bediengerät (2) und der Zusatzbildschirm (3, 4) jeweils eine Induktionsspule umfassen, um den Zusatzbildschirm (3, 4) beim Empfang der Informationen und bei einer Aktualisierung der Darstellung mit Energie zu versorgen, insbesondere wobei die Induktionsspulen als Antennen zur drahtlosen Übertragung der Informationen (5a, 5b, 5c, 5d) ausgebildet sind und die Induktionsspule des Bediengeräts (2) dem Datensender (22) und die Induktionsspule des Zusatzbildschirms (3, 4) dem Datenempfänger (32, 42) zugeordnet sind.

9. Bediensystem (1) nach wenigstens einem der Ansprüche 1 - 6, wobei der mindestens eine Zusatzbildschirm (3, 4) an einer Baugruppe der Behälterbehandlungsmaschine (6) angeordnet ist.

10. Behälterbehandlungsmaschine (6) einer Getränkeverarbeitungsanlage mit einem Bediensystem (1) nach wenigstens einem der Ansprüche 1- 9.

11. Verfahren zur Bedienung und/oder Beobachtung einer Behälterbehandlungsmaschine (6) einer Getränkeverarbeitungsanlage,
**dadurch gekennzeichnet, dass**
Informationen (5a, 5b, 5c, 5d) von einem Benutzer (7) an einem stationären Bediengerät (2) für die Behälterbehandlungsmaschine (6), das einen Bildschirm (21) und eine Eingabeeinheit umfasst, am Bildschirm (21) des Bediengeräts (2) und/oder über die Eingabeeinheit ausgewählt werden,
die Informationen (5a, 5b, 5c, 5d) mit einem Datensender (22) im Bediengerät (2) an einen Datenempfänger (32, 42) in mindestens einem separaten Zusatzbildschirm (3, 4) übermittelt werden, und
die am Bediengerät (2) ausgewählten und an den Datenempfänger (32, 42) übermittelten Informationen (5a, 5b, 5c, 5d) auf dem Zusatzbildschirm (3, 4) angezeigt werden.

12. Verfahren nach Anspruch 11, wobei bei der Auswahl der Informationen (5a, 5b, 5c, 5d) am Bildschirm (21) des Bediengeräts (2) von einem Benutzer (7) einzelne Informationstypen ausgewählt werden, die insbesondere Texte, Werte und/oder Parameter sind.

13. Verfahren nach Anspruch 11 oder 12, wobei im Bediengerät (2) Informationsvorlagen mit jeweils einer hierarchischen Anordnung von Informationstypen abgespeichert werden und ein Benutzer (7) mindestens eine Informationsvorlage auswählt, um die Informationen (5a, 5b, 5c, 5d) anhand der darin gespeicherten Informationstypen automatisch auszuwählen.

14. Verfahren nach wenigstens einem der Ansprüche 11 - 13, wobei bei der Auswahl der Informationen (5a, 5b, 5c, 5d) ein Screenshot des Bildschirms (21) am Bediengerät (2) erstellt wird.

15. Verfahren nach wenigstens einem der Ansprüche 11 - 14, wobei bei der Auswahl der Informationen (5a, 5b, 5c, 5d) ein Benutzer (7) Dokumente aus einer Liste auswählt, insbesondere wobei die Dokumente Bedienungsanleitungen, Montageanleitungen und/oder Checklisten sind.

16. Verfahren nach wenigstens einem der Ansprüche 11 - 13, wobei die ausgewählten Informationen (5a, 5b, 5c, 5d) individuelle Baugruppeninformationen sind, die an einer Baugruppe (61, 62) der Behälterbehandlungsmaschine (6) mit dem Zusatzbildschirm (3, 4) angezeigt werden.

## Claims

1. Operating system (1) for a container handling machine (6) of a beverage processing plant, comprising
a stationary operating device (2) for the container handling machine (6) with a screen (21), an input unit and a data transmitter (22) for transmitting information (5a, 5b, 5c, 5d), and
at least one separate additional screen (3, 4) with a data receiver (32, 42) for receiving said information (5a, 5b, 5c, 5d),
**characterized in that**
the operating device (2) being designed for selecting said information (5a, 5b, 5c, 5d), wherein the information is selected by a user (7) at the screen (21) of the operating device (2) and/or via the input unit, and
said additional screen (3) being designed for displaying said information (5a, 5b, 5c, 5d) being selected at the operating device (2) and received with the data receiver (32, 42).

2. Operating system (1) according to claim 1, wherein said additional screen (3) comprises, for displaying said selected information (5a, 5b, 5c, 5d), a display unit (31, 41) with electronic paper.

3. Operating system (1) according to claim 1 or 2, wherein said screen (21) of the operating device (2) is designed to be touch-sensitive for the user's input, in particular for selecting said information (5a, 5b, 5c, 5d).

4. Operating system (1) according to at least one of the preceding claims, wherein said data transmitter (22) and said data receiver (32, 42) are designed each with a radio interface for wireless transmission of said information (5a, 5b, 5c, 5d).

5. Operating system (1) according to at least one of the preceding claims, wherein said additional screen (3, 4) comprises a battery for power supply.

6. Operating system (1) according to at least one of the preceding claims, wherein said operating device (2) comprises information templates for automatically selecting said information (5a, 5b, 5c, 5d), in particular wherein said information (5a, 5b, 5c, 5d) are formed from different types of information and a hierarchical arrangement of said types of information are stored each in the information templates.

7. Operating system (1) according to at least one of the preceding claims, wherein said additional screen (3, 4) is designed as mobile unit.

8. Operating system (1) according to claim 7, wherein said operating device (2) and said additional screen (3, 4) each comprise an induction coil to supply said additional screen (3, 4) with energy when it is receiving information and updating the display, in particular wherein said induction coils are designed as antennae for wireless transmission of said information (5a, 5b, 5c, 5d), and said induction coil of the operating device (2) is allocated to the data transmitter (22), and said induction coil of the additional screen (3, 4) is allocated to the data receiver (32, 42).

9. Operating system (1) according to at least one of claims 1 - 6, wherein the at least one additional screen (3, 4) is arranged at an assembly of the container handling machine (6).

10. Container handling machine (6) of a beverage processing plant with an operating system (1) according to at least one of claims 1-9.

11. Method for operating and/or monitoring a container handling machine (6) of a beverage processing plant,
**characterized in that**
information (5a, 5b, 5c, 5d) are selected by a user (7) at a stationary operating device (2) for the container handling machine (6) which comprises a screen (21) and an input unit, the information (5a, 5b, 5c, 5d) are selected at a screen (21) of the operating device (2) and/or via an input unit,
said information (5a, 5b, 5c, 5d) are transmitted with a data transmitter (22) in the operating device (2) to a data receiver (32, 42) in at least one separate additional screen (3, 4), and
said information (5a, 5b, 5c, 5d) selected at the operating device (2) and transmitted to the data receiver (32,42) are displayed on the additional screen (3, 4).

12. Method according to claim 11, wherein a user (7) selects, when selecting said information (5a, 5b, 5c, 5d), individual types of information at the screen (21) of the operating device (2), said information being in particular texts, values and/or parameters.

13. Method according to claim 11 or 12, wherein in the operating device (2), information templates containing each a hierarchical arrangement of types of information are stored, and a user (7) selects at least one information template to automatically select said information (5a, 5b, 5c, 5d) by means of the types of information stored therein.

14. Method according to at least one of claims 11 1-13, wherein in the selection of said information (5a, 5b, 5c, 5d), a screenshot of the screen (21) is generated at the operating device (2).

15. Method according to at least one of claims 11-14, wherein a user (7) selects, when selecting said information (5a, 5b, 5c, 5d), documents from a list, said documents being in particular operating instructions, assembly instructions, and/or checklists.

16. Method according to at least one of claims 11-13, wherein said selected information (5a, 5b, 5c, 5d) are individual assembly information which are displayed at an assembly (61, 62) of the container handling machine (6) with the additional screen (3, 4).

## Revendications

1. Système de commande (1) pour une machine de traitement de récipients (6) d'une installation de préparation de boissons, comprenant
un appareil de commande stationnaire (2) pour la machine de traitement de récipients (6) avec un écran (21), une unité d'entrée et un émetteur de données (22) pour fournir des informations (5a, 5b, 5c, 5d), et
au moins un écran auxiliaire séparé (3, 4) avec un récepteur de données (32, 42) pour la réception des informations (5a, 5b, 5c, 5d),
**caractérisé en ce que**
l'appareil de commande (2) est conçu pour la sélection des informations (5a, 5b, 5c, 5d), dans lequel les informations peuvent être sélectionnées par un utilisateur (7) sur l'écran (21) de l'appareil de commande (2) et/ou sur l'unité d'entrée, et
l'écran auxiliaire (3) est conçu pour afficher les informations reçues (5a, 5b, 5c, 5d) sélectionnées sur l'appareil de commande (2) et reçues par le récepteur de données (32, 42).

2. Système de commande (1) selon la revendication 1, dans lequel l'écran auxiliaire (3) comprend une unité d'affichage (31, 41) de type papier électronique pour l'affichage des informations sélectionnées (5a, 5b, 5c, 5d) .

3. Système de commande (1) selon la revendication 1 ou 2, dans lequel l'écran (21) de l'appareil de commande (2) est conçu de manière tactile pour une entrée par l'utilisateur, en particulier pour la sélection des informations (5a, 5b, 5c, 5d).

4. Système de commande (1) selon au moins l'une des revendications précédentes, dans lequel l'émetteur de données (22) et le récepteur de données (32, 42) sont conçus avec chacun une interface radio pour une transmission sans fil des informations (5a, 5b, 5c, 5d).

5. Système de commande (1) selon au moins l'une des revendications précédentes, dans lequel l'écran auxiliaire (3, 4) comporte une batterie d'alimentation d'énergie.

6. Système de commande (1) selon au moins l'une des revendications précédentes, dans lequel l'appareil de commande (2) comporte des modèles d'information pour la sélection automatique des informations (5a, 5b, 5c, 5d), en particulier dans lequel les informations (5a, 5b, 5c, 5d) comportent différents types d'information et dans lequel les modèles d'information sont stockés selon un agencement hiérarchique desdits types d'information.

7. Système de commande (1) selon au moins l'une des revendications précédentes, dans lequel l'écran auxiliaire (3, 4) est réalisé sous forme d'une unité mobile.

8. Système de commande (1) selon la revendication 7, dans lequel l'appareil de commande (2) et l'écran auxiliaire (3, 4) comportent chacun une bobine d'induction pour alimenter en énergie l'écran auxiliaire (3, 4) lors de la réception des informations et lors d'une actualisation de l'affichage, en particulier dans lequel les bobines d'induction sont conçues comme des antennes pour la transmission sans fil des informations (5a, 5b, 5c, 5d), et la bobine d'induction de l'appareil de commande (2) est associée à l'émetteur de données (22) et la bobine d'induction de l'écran additionnel (3, 4) est associée au récepteur de données (32, 42).

9. Système de commande (1) selon au moins l'une des revendications 1 à 6, dans lequel ledit au moins un écran auxiliaire (3, 4) est associé à un module de la machine de traitement de récipients (6).

10. Machine de traitement de récipients (6) d'une installation de préparation de boissons avec un système de commande (1) selon au moins l'une des revendications 1 à 9.

11. Procédé de commande et/ou de surveillance d'une machine de traitement de récipients (6) d'une installation de préparation de boissons,
**caractérisé en ce que**
des informations (5a, 5b, 5c, 5d) sont sélectionnées par un utilisateur (7) sur un appareil de commande stationnaire (2) pour la machine de traitement de récipients (6), qui comporte un écran (21) et une unité d'entrée, à l'écran (21) de l'appareil de commande (2) et/ou via l'unité d'entrée,
les informations (5a, 5b, 5c, 5d) sont transmises par un émetteur de données (22) dans l'appareil de commande (2) à un récepteur de données (32, 42) sur au moins un écran auxiliaire séparé (3, 4), et
les informations (5a, 5b, 5c, 5d) sélectionnées sur l'appareil de commande (2) et transmises au récepteur de données (32, 42) sont affichées sur l'écran auxiliaire (3, 4) .

12. Procédé selon la revendication 11, dans lequel, lors de la sélection des informations (5a, 5b, 5c, 5d) sur l'écran (21) de l'appareil de commande (2) par un utilisateur (7), des types d'information individuels sont sélectionnés, qui sont en particulier des textes, des valeurs et/ou des paramètres.

13. Procédé selon la revendication 11 ou 12, dans lequel des modèles d'information avec un agencement hiérarchique correspondant de types d'information sont stockés sur l'appareil de commande (2), et un utilisateur (7) sélectionne au moins un modèle d'information pour sélectionner automatiquement les informations (5a, 5b, 5c, 5d) au moyen des types d'information qui y sont stockés.

14. Procédé selon au moins l'une des revendications 11 à 13, dans lequel une capture d'écran de l'écran (21) est réalisée sur l'appareil de commande (2) lors de la sélection des informations (5a, 5b, 5c, 5d).

15. Procédé selon au moins l'une des revendications 11 à 14, dans lequel un utilisateur (7) sélectionne des documents dans une liste lors de la sélection des informations (5a, 5b, 5c, 5d), en particulier dans lequel les documents sont des manuels d'utilisation, des manuels de montage et/ou des listes de vérifications.

16. Procédé selon au moins l'une des revendications 11 à 13, dans lequel les informations sélectionnées (5a, 5b, 5c, 5d) sont des informations de modules individuels, qui sont affichées par l'écran auxiliaire (3, 4) sur un module (61, 62) de la machine de traitement de récipients (6).
